# EUROPÄISCHE PATENTSCHRIFT

(11) **EP 3 394 458 B1**
(45) Veröffentlichungstag und Bekanntmachung des Hinweises auf die Patenterteilung: **05.06.2019**
(21) Anmeldenummer: 18704158.7
(22) Anmeldetag: 24.01.2018
(51) Int. Cl.: F16C 33/12, F16C 33/14, F16C 33/24

(54) **GLEITLAGERVERBUNDWERKSTOFF MIT EINER METALLISCHEN STÜTZSCHICHT UND EINER METALLISCHEN LAGERMETALLSCHICHT**
PLAIN BEARING COMPOSITE MATERIAL HAVING A METALLIC SUPPORT LAYER AND A METALLIC BEARING METAL LAYER
MATÉRIAU COMPOSITE DE PALIER LISSE COMPRENANT UNE COUCHE D'APPUI MÉTALLIQUE ET UNE COUCHE MÉTALLIQUE DE SUPPORT MÉTALLIQUE

(30) Priorität: 16.03.2017 DE 102017105602
(43) Veröffentlichungstag der Anmeldung: 31.10.2018
(73) Patentinhaber: KS Gleitlager GmbH, 68789 St. Leon-Rot (DE)
(72) Erfinder: SCHUBERT, Werner, 69168 Wiesloch (DE)
(74) Vertreter: DREISS Patentanwälte PartG mbB
(86) Internationale Anmeldenummer: PCT/EP2018/051658
(87) Internationale Veröffentlichungsnummer: WO 2018/166681

(56) Entgegenhaltungen:
- DE-A1-102004 008 630
- DE-B3-102007 033 902
- JP-A- S6 058 841

## Beschreibung

Die Erfindung betrifft einen Gleitlagerverbundwerkstoff mit einer metallischen Stützschicht und einer metallischen Lagermetallschicht, wobei die Lagermetallschicht eine aus einem Bronzepulver auf Kupfer-Zinn-Basis gebildete Sinterschicht ist, wobei das Bronzepulver einen metallischen in Kupfer nicht oder kaum lösbaren Festschmierstoff, wie insbesondere Wismut, umfasst und in pulverförmigem Zustand auf die Stützschicht aufgebracht und dann auf die Stützschicht aufgesintert ist.

Gleitlagerverbundwerkstoffe der vorgenannten Art sind bekannt. DE 10 2007 033 902 B3 offenbart einen solchen Gleitlagerverbundwerkstoff, bei dem Festschmierstoff hexagonales Bornitrid enthält.

Der vorliegenden Erfindung liegt die Aufgabe zugrunde, die Belastbarkeit und Verschleißbeständigkeit des Gleitlagerverbundwerkstoffs zu verbessern.

Diese Aufgabe wird erfindungsgemäß dadurch gelöst, dass das Bronzepulver aus Pulverfraktionen mit unterschiedlichem Anteil dieses Festschmierstoffs gebildet ist, wobei der Festschmierstoffanteil einer ersten Pulverfraktion wenigstens um den Faktor 2 größer ist als der Festschmierstoffanteil einer zweiten Pulverfraktion, wobei die zweite Pulverfraktion auch festschmierstofffrei sein kann.

Die Anmelderin hat festgestellt, dass sich der in dem Bronzepulver auf Kupferzinnbasis enthaltene Festschmierstoff im Hinblick auf die Ausbildung eines innigen Zusammenhalts der die Lagermetallschicht bildenden Metallpartikel insoweit als problematisch erweisen kann, als er während des Sinterprozesses zumindest teilweise aus den Bronzepartikeln austritt. Er sammelt sich an deren Oberfläche an und neigt auch dazu, die Hohlräume zwischen den Partikeln zu befüllen. Da der Festschmierstoff aber auch die Oberfläche der Bronzepartikel benetzt, erschwert er damit das Versintern der einzelnen Bronzepartikel miteinander. Er ist daher geeignet, eine innige dreidimensional dichte stoffschlüssige Verbindung der Bronzepartikel zu beeinträchtigen, was wiederum Auswirkungen auf die Verschleißbeständigkeit und Belastbarkeit des Gleitlagerverbundwerkstoffs hat und diese beeinträchtigt.

Die Anmelderin hat festgestellt, dass durch die erfindungsgemäße Maßnahme der Verwendung von Pulverfraktionen mit unterschiedlichem Anteil des Festschmierstoffs die Versinterbarkeit der Bronzepartikel deutlich verbessert werden kann. An der Oberfläche der Partikel der zweiten Pulverfraktion, bei der der Festschmierstoffanteil deutlich geringer als bei der ersten Partikelfraktion ist und die vorzugsweise einen sehr geringen Festschmierstoffanteil aufweist oder vorzugsweise auch festschmierstofffrei ausgebildet sein kann, wird die Oberfläche der Partikel sehr viel weniger von Festschmierstoff benetzt, so dass der Sinterverbund insgesamt, also die stoffschlüssige Verbindung der Partikel untereinander, verbessert ist, was sich wiederum positiv auf die Verschleißbeständigkeit und Belastbarkeit des Gleitlagerverbundwerkstoffs auswirkt. Es wird daher vorgeschlagen, dass der Festschmierstoffanteil der ersten Pulverfraktion wenigstens um den Faktor 4, insbesondere wenigstens um den Faktor 6, insbesondere wenigstens um den Faktor 10 größer ist als der Festschmierstoffanteil der zweiten Pulverfraktion. Die zweite Pulverfraktion ist vorzugsweise festschmierstofffrei.

Bei dem erfindungsgemäßen Gleitlagerverbundwerkstoff ergeben sich dann auf Skalen der Bronzepartikel lokal unterschiedliche Zusammensetzungen der Lagermetallschicht. Es wurde festgestellt, dass hierdurch im Betrieb eine bessere Partikelverträglichkeit und Anpassbarkeit erzielt wird, die sich wiederum positiv in Richtung einer höheren Belastbarkeit auswirkt, weil Störpartikel lokal besser aufgenommen werden können.

Im Sinne der Erfindung ist es auch denkbar, dass das Bronzepulver noch weitere Pulverfraktionen umfasst, wobei es als zweckmäßig angesehen wird, wenn das Bronzepulver aus der ersten und der zweiten Pulverfraktion besteht.

Wie eingangs schon angedeutet, handelt es sich bei dem metallischen in Kupfer nicht oder kaum lösbaren Festschmierstoff vorzugsweise um Wismut. Aufgrund der Nichtlöslichkeit von Wismut in Kupfer und aufgrund der sehr hohen Sintertemperatur und der damit verbundenen Beweglichkeit innerhalb der Kupfermatrix bildet Wismut lokale Phasen und Ausscheidungen, tendiert aber, wie erwähnt, auch zum Ausschwitzen in Bezug auf die Bronzepartikel, was dann die durch die Anmelderin festgestellte Versinterbarkeit der Partikel nachteilig beeinflusst. Dem wird aber durch die erfindungsgemäße Verwendung von Pulverfraktionen unterschiedlichen Wismutanteils begegnet.

In Weiterbildung der Erfindung wird vorgeschlagen, dass die Pulverfraktionen auch einen unterschiedlichen Zinngehalt aufweisen. Es erweist sich hier als vorteilhaft, wenn die erste Pulverfraktion, welche den hohen Festschmierstoffanteil aufweist, auch einen größeren Zinngehalt als die zweite Pulverfraktion aufweist. Dies liegt zum einen darin begründet, dass ein zunehmender Zinngehalt einhergeht mit einer abnehmenden Sintertemperatur. Die Sinterung wird zwar ausgeführt bei der höheren Sintertemperatur beider Pulverfraktionen; für die andere Pulverfraktion mit höherem Zinn- und Festschmierstoffanteil bedeutet dies dann aber ein qualitativ besseres Ergebnis der sich ausbildenden Sinterbrücken. Dessen ungeachtet bedeutet ein höherer Zinngehalt außerdem, dass der betreffende Partikel härter ist. Wenn dieser Partikel zugleich einen höheren Festschmierstoffanteil aufweist, so ist dieser härtere Partikel nach dem Ausschwitzen des Festschmierstoffs auch von mehr Festschmierstoff umgeben, was sich als tribologisch vorteilhaft erweist.

Es wird weiter vorgeschlagen, dass eine erste Pulverfraktion einen Zinngehalt von 8 - 11 Gew.-% aufweist und eine zweite Pulverfraktion einen Zinngehalt von 3 - 8 Gew.-%, insbesondere von 3 - 6 Gew.-% aufweist.

Ferner erweist es sich als vorteilhaft, wenn eine erste Pulverfraktion einen Wismutgehalt von 4 - 20 Gew.-%, insbesondere von 6 - 16 Gew.-%, insbesondere 8 - 12 Gew.-% aufweist und eine zweite Pulverfraktion einen Wismutgehalt von bis zu 2 Gew.-%, insbesondere von bis zu 1 Gew.-% und weiter insbesondere von bis zu 0,1 Gew.-% aufweist. Die zweite Pulverfraktion ist vorzugsweise festschmierstofffrei und damit auch wismutfrei.

Weiter erweist es sich als vorteilhaft, wenn eine erste Pulverfraktion von einer CuSn(8-12)Bi(6-10)-Legierung, insbesondere von einer CuSn(9-11)Bi(7-9)-Legierung, insbesondere von einer CuSn(10)Bi(8)-Legierung, und eine zweite Pulverfraktion von einer CuSn(4-6)-Legierung, insbesondere von einer CuSn(5)-Legierung gebildet ist, wobei die Legierungen optional 0,5-5 Gew.-% Zink, insbesondere 0,5-4 Gew.-% Zink, insbesondere 0,5-3 Gew.-% Zink, weiter optional 0,5-6 Gew.-% Nickel, insbesondere 0,5-5 Gew.-% Nickel, insbesondere 0,5-4 Gew.-% Nickel, insbesondere 0,5-3 Gew.-% Nickel, und weiter optional 0,1-1 Gew.-% Silber, insbesondere 0,1-0,5 Gew.-% Silber zusätzlich umfassen können. Bevorzugt ist für die erste Pulverfraktion eine CuSn(10)Bi(8)Zn(3)-Legierung und für die zweite Pulverfraktion eine CuSn(5)Zn(1)-Legierung oder eine CuSn(4,5)Zn(0,8)Ni(0,6)Ag(0,4)-Legierung.

Gegenstand der Erfindung ist auch ein Verfahren zum Herstellen eines Gleitlagerverbundwerkstoffs mit den Merkmalen des Anspruchs 8. Demnach werden also die zwei Pulverfraktionen bereitgestellt und vollständig, also homogen miteinander, vermischt und dann auf die metallische Stützschicht aufgestreut und darauf sowie miteinander versintert. Hierbei kann das Aufsintern oder Versintern ein Vorsintern, daran anschließend ein Verdichten, daran anschließend ein Nachsintern und daran anschließend ein Walzen umfassen.

Es erweist sich als vorteilhaft, wenn die Lagermetallschicht derart verdichtet wird, dass im wesentlichen keine freien Poren zwischen den miteinander versinterten Partikeln des Bronzepulvers mehr vorhanden sind. Man erkennt in einem Schliffbild allenfalls Wismutphasen zwischen den versinterten und verdichteten Bronzepartikeln. Insbesondere ist die Porosität geringer als 0,1%.

Ferner kann im Anschluss an das Aufsintern, insbesondere an das Nachsintern, insbesondere vor und/oder nach dem Walzen, eine Wärmebehandlung mit dem Ziel der Härteeinstellung der metallischen Stützschicht und der Lagermetallschicht ausgeführt werden.

Weitere Einzelheiten, Merkmale und Vorteile der Erfindung ergeben sich aus den beigefügten Patentansprüchen und aus der zeichnerischen Darstellung und nachfolgenden Beschreibung des erfindungsgemäßen Gleitlagerverbundwerkstoffs.

In der Zeichnung zeigt:
- Figur 1: eine stark schematische Schnittansicht eines erfindungsgemäßen Gleitlagerverbundwerkstoffs (nach einem Aufsintern, jedoch vor einer Verdichtung) und
- Figur 2: eine schematische Ansicht eines Gleitlagerelements aus einem erfindungsgemäßen Gleitlagerverbundwerkstoff, in Form einer Gleitlagerschale zur Lagerung der Kurbelwelle bei einem Verbrennungsmotor.

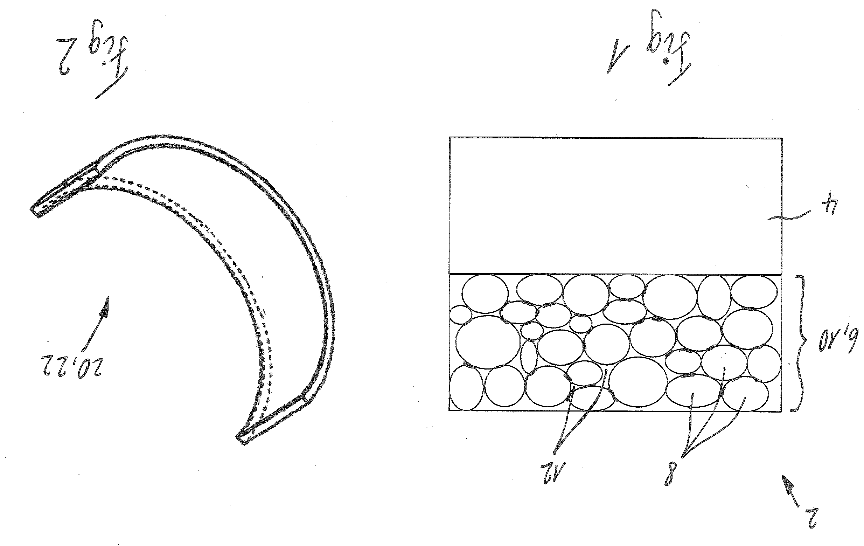

Der erfindungsgemäße Gleitlagerverbundwerkstoff 2 umfasst eine metallische Stützschicht 4, insbesondere aus Stahl, und eine metallische Lagermetallschicht 6 in Form einer aus einem Bronzepulver 8 auf Kupferzinnbasis gebildeten Sinterschicht 10. Das Bronzepulver 8 ist in pulverförmigem Zustand auf die Stützschicht 4 aufgebracht und aufgesintert. Das Bronzepulver 8 auf Kupferzinnbasis umfasst zusätzlich einen metallischen in Kupfer nicht oder kaum lösbaren Festschmierstoff. Im Zuge des Sintervorgangs tritt ein Teil dieses metallischen Festschmierstoffs aus und sammelt sich in Zwischenräumen 12 zwischen den Partikeln des Bronzepulvers 8 an und bildet dort gewissermaßen Schmiertaschen um den betreffenden Partikel herum. Figur 1 zeigt den Gleitlagerverbundwerkstoff schematisch nach dem Aufsintern des Bronzepulvers, jedoch vor einem Verdichtungsvorgang. Er besitzt also noch eine Porosität, also freie Poren zwischen den Partikeln des Bronzepulvers 8. Vorzugsweise wird die so erhaltene Lagermetallschicht 6 in einem oder mehreren Schritten derart verdichtet, dass im wesentlichen keine freien Poren zwischen den miteinander versinterten Partikeln des Bronzepulvers mehr vorhanden sind. Die Lagermetallschicht 6 ist also dichtgesintert.

Erfindungsgemäß ist das Bronzepulver 8 aus Pulverfraktionen mit unterschiedlichem Anteil des metallischen Festschmierstoffs, vorzugsweise in Form von Wismut, gebildet, so wie dies vorausgehend beschrieben wurde. Hierdurch wird ein verbesserter Sinterverbund erreicht.

Figur 2 zeigt ein Gleitlagerelement 20 in Form einer Lagerschale 22, die in einem Biege-Rollvorgang aus einem Abschnitt des erfindungsgemäßen Gleitlagerverbundwerkstoffs 2 hergestellt wurde.

## Patentansprüche

1. Gleitlagerverbundwerkstoff (2) mit einer metallischen Stützschicht (4) und einer metallischen Lagermetallschicht (6), wobei die Lagermetallschicht (6) eine aus einem Bronzepulver (8) auf Kupfer-Zinn-Basis gebildete Sinterschicht (10) ist, wobei das Bronzepulver (8) einen metallischen in Kupfer nicht oder kaum lösbaren Festschmierstoff, wie insbesondere Wismut, umfasst und in pulverförmigem Zustand auf die Stützschicht (4) aufgebracht und dann auf die Stützschicht (4) aufgesintert ist, **dadurch gekennzeichnet, dass** das Bronzepulver (8) aus Pulverfraktionen mit unterschiedlichem Anteil dieses Festschmierstoffs gebildet ist, wobei der Festschmierstoffanteil einer ersten Pulverfraktion wenigstens um den Faktor 2 größer ist als der Festschmierstoffanteil einer zweiten Pulverfraktion, wobei die zweite Pulverfraktion auch festschmierstofffrei sein kann.

2. Gleitlagerverbundwerkstoff nach Anspruch 1, **dadurch gekennzeichnet, dass** die zweite Pulverfraktion festschmierstofffrei ausgebildet ist.

3. Gleitlagerverbundwerkstoff nach Anspruch 1 oder 2, **dadurch gekennzeichnet, dass** der Festschmierstoffanteil der ersten Pulverfraktion wenigstens um den Faktor 4, insbesondere wenigstens um den Faktor 6, insbesondere wenigstens um den Faktor 10 größer ist als der Festschmierstoffanteil der zweiten Pulverfraktion.

4. Gleitlagerverbundwerkstoff nach Anspruch 1, 2 oder 3, **dadurch gekennzeichnet, dass** der Festschmierstoff Wismut ist.

5. Gleitlagerverbundwerkstoff nach einem oder mehreren der vorstehenden Ansprüche, **dadurch gekennzeichnet, dass** die Pulverfraktionen einen unterschiedlichen Zinngehalt aufweisen,
und dass die erste Pulverfraktion einen größeren Zinngehalt als die zweite Pulverfraktion aufweist, insbesondere dass die erste Pulverfraktion einen Zinngehalt von 8 - 11 Gew.-% aufweist und die zweite Pulverfraktion einen Zinngehalt von 3 - 8 Gew.-%, insbesondere von 3 - 6 Gew.-% aufweist.

6. Gleitlagerverbundwerkstoff nach einem oder mehreren der vorstehenden Ansprüche, **dadurch gekennzeichnet, dass** eine erste Pulverfraktion einen Wismutgehalt von 4 - 20 Gew.-%, insbesondere von 6 - 16 Gew.-%, insbesondere 8 - 12 Gew.-%, aufweist und eine zweite Pulverfraktion einen Wismutgehalt von bis zu 2 Gew.-%, insbesondere von bis zu 1 Gew.-% und weiter insbesondere von bis zu 0,1 Gew.-% aufweist.

7. Gleitlagerverbundwerkstoff nach einem oder mehreren der vorstehenden Ansprüche, **dadurch gekennzeichnet, dass** eine erste Pulverfraktion von einer CuSn(8-12)Bi(6-10)-Legierung, insbesondere von einer CuSn(9-11)Bi(7-9)-Legierung, insbesondere von einer CuSn(10)Bi(8)-Legierung, und eine zweite Pulverfraktion von einer CuSn(4-6)-Legierung, insbesondere von einer CuSn(5)-Legierung gebildet ist, wobei die Legierungen optional 0,5-5 Gew.-% Zink, insbesondere 0,5-4 Gew.-% Zink, insbesondere 0,5-3 Gew.-% Zink, weiter optional 0,5-6 Gew.-% Nickel, insbesondere 0,5-5 Gew.-% Nickel, insbesondere 0,5-4 Gew.-% Nickel, insbesondere 0,5-3 Gew.-% Nickel, und weiter optional 0,1-1 Gew.-% Silber, insbesondere 0,1-0,5 Gew.-% Silber zusätzlich umfassen können.

8. Verfahren zum Herstellen eines Gleitlagerverbundwerkstoffs (2) nach einem oder mehreren der vorstehenden Ansprüche und im Anschluss daran von Gleitlagerelementen (20), **dadurch gekennzeichnet, dass** ein Bronzepulver (8) bereitgestellt wird, indem eine erste und eine zweite Pulverfraktion mit unterschiedlichem Anteil des metallischen in Kupfer nicht oder kaum lösbaren Festschmierstoffs bereitgestellt werden, wobei der Festschmierstoffanteil der ersten Pulverfraktion wenigstens um den Faktor 2 größer ist als der Festschmierstoffanteil der zweiten Pulverfraktion, und indem die erste und die zweite Pulverfraktion miteinander vermischt werden, vorzugsweise unter Verwendung eines Taumelmischers, und dass das so erhaltene Bronzepulver (8) auf ein die metallische Stützschicht (4) bildendes Trägerband, insbesondere aus Stahl, aufgestreut und anschließend aufgesintert wird.

9. Verfahren nach Anspruch 8, **dadurch gekennzeichnet, dass** das Aufsintern ein Vorsintern, daran anschließend ein Verdichten, daran anschließend ein Nachsintern und daran anschließend ein Walzen umfasst.

10. Verfahren nach Anspruch 8 oder 9, **dadurch gekennzeichnet, dass** die Lagermetallschicht derart verdichtet wird, dass im wesentlichen keine freien Poren zwischen den miteinander versinterten Partikeln des Bronzepulvers mehr vorhanden sind.

11. Verfahren nach Anspruch 8, 9 oder 10, **dadurch gekennzeichnet, dass** im Anschluss an das Aufsintern, insbesondere an das Nachsintern, insbesondere vor und/oder nach dem Walzen, eine Wärmebehandlung mit dem Ziel der Härteeinstellung der metallischen Stützschicht (4) und der Lagermetallschicht (6) ausgeführt wird.

12. Verfahren nach einem oder mehreren der Ansprüche 8-11, **dadurch gekennzeichnet, dass** von dem Trägerband quer zu dessen Längsrichtung Platinenabschnitte abgetrennt werden, die dann in einem Biege-/Rollprozess zu Gleitlagerelementen (20), insbesondere zu Gleitlagerschalen (22) oder -buchsen geformt werden.

13. Verfahren nach einem oder mehreren der vorstehenden Ansprüche 8-12, **dadurch gekennzeichnet, dass** die erste Pulverfraktion einen größeren Zinngehalt als die zweite Pulverfraktion aufweist und
dass die erste Pulverfraktion einen Zinngehalt von 8 - 11 Gew.-% aufweist und die zweite Pulverfraktion einen Zinngehalt von 3 - 8 Gew.-%, insbesondere von 3 - 6 Gew.-% aufweist.

14. Verfahren nach einem oder mehreren der vorstehenden Ansprüche 8-13, **dadurch gekennzeichnet, dass** eine erste Pulverfraktion von einer CuSn(8-12)Bi(6-10)-Legierung, insbesondere von einer CuSn(9-11)Bi(7-9)-Legierung, insbesondere von einer CuSn(10)Bi(8)-Legierung, und eine zweite Pulverfraktion von einer CuSn(4-6)-Legierung, insbesondere von einer CuSn(5)-Legierung gebildet ist, wobei die Legierungen optional 0,5-5 Gew.-% Zink, insbesondere 0,5-4 Gew.-% Zink, insbesondere 0,5-3 Gew.-% Zink, weiter optional 0,5-6 Gew.-% Nickel, insbesondere 0,5-5 Gew.-% Nickel, insbesondere 0,5-4 Gew.-% Nickel, insbesondere 0,5-3 Gew.-% Nickel, und weiter optional 0,1-1 Gew.-% Silber, insbesondere 0,1-0,5 Gew.-% Silber zusätzlich umfassen können.

15. Gleitlagerelement (20), insbesondere Gleitlagerschale (22) zur Lagerung der Kurbelwelle bei Verbrennungsmotoren, hergestellt aus einem Gleitlagerverbundwerkstoff nach einem oder mehreren der Ansprüche 1-7.

## Claims

1. Plain bearing composite material (2) having a metallic support layer (4) and a metallic bearing metal layer (6), wherein the bearing metal layer (6) is a sinter layer (10) formed of a copper-tin-based bronze powder (8), wherein the bronze powder (8) contains a metallic solid lubricant which is not, or scarcely, soluble in copper, such as, in particular, bismuth, and is applied to the support layer (4) in powder form and then sintered onto the support layer (4), **characterised in that** the bronze powder (8) is formed of powder fractions with differing contents of this solid lubricant, wherein the solid lubricant content of a first powder fraction is greater by a factor of at least 2 than the solid lubricant content of a second powder fraction, wherein the second powder fraction can also be solid-lubricant-free.

2. Plain bearing composite material according to claim 1, **characterised in that** the second powder fraction is solid-lubricant-free.

3. Plain bearing composite material according to claim 1 or 2, **characterised in that** the solid lubricant content of the first powder fraction is greater by a factor of at least 4, in particular by a factor of at least 6, in particular by a factor of at least 10 than the solid lubricant content of the second powder fraction.

4. Plain bearing composite material according to claim 1, 2 or 3, **characterised in that** the solid lubricant is bismuth.

5. Plain bearing composite material according to one or more of the preceding claims, **characterised in that** the powder fractions have different tin contents,
and that the first powder fraction has a greater tin content than the second powder fraction, in particular that the first powder fraction has a tin content of 8 - 11 wt% and the second powder fraction has a tin content of 3 - 8 wt%, in particular of 3 - 6 wt%.

6. Plain bearing composite material according to one or more of the preceding claims, **characterised in that** a first powder fraction has a bismuth content of 4 - 20 wt%, in particular of 6 - 16 wt%, in particular 8 - 12 wt%, and a second powder fraction has a bismuth content of up to 2 wt%, in particular of up to 1 wt% and more particularly of up to 0.1 wt%.

7. Plain bearing composite material according to one or more of the preceding claims, **characterised in that** a first powder fraction is formed by a CuSn(8-12)Bi(6-10) alloy, in particular by a CuSn(9-11)Bi(7-9) alloy, in particular by a CuSn(10)Bi(8) alloy, and a second powder fraction is formed by a CuSn(4-6) alloy, in particular by a CuSn(5) alloy, wherein the alloys can, optionally, comprise in addition 0.5-5 wt% zinc, in particular 0.5-4 wt% zinc, in particular 0.5-3 wt% zinc, further optionally 0.5-6 wt% nickel, in particular 0.5-5 wt% nickel, in particular 0.5-4 wt% nickel, in particular 0.5-3 wt% nickel, and further optionally 0.1-1 wt% silver, in particular 0.1-0.5 wt% silver.

8. Method for producing a plain bearing composite material (2) according to one or more of the preceding claims, and subsequently plain bearing elements (20), **characterised in that** a bronze powder (8) is provided **in that** a first and a second powder fraction with differing contents of the metallic solid lubricant which is not, or scarcely, soluble in copper are provided, wherein the solid lubricant content of the first powder fraction is greater by a factor of at least 2 than the solid lubricant content of the second powder fraction, and **in that** the first and the second powder fraction are mixed with one another, preferably using a tumble mixer, and that the bronze powder (8) thus obtained is scattered on a carrier strip, in particular made of steel, forming the metallic support layer (4), and then sintered on.

9. Method according to claim 8, **characterised in that** the sintering comprises pre-sintering, followed by compaction, followed by re-sintering and finally rolling.

10. Method according to claim 8 or 9, **characterised in that** the bearing metal layer is compacted such that, substantially, free pores are no longer present between the particles of the bronze powder which have been sintered with one another.

11. Method according to claim 8, 9 or 10, **characterised in that**, following the sintering, in particular the re-sintering, in particular before and/or after the rolling, a heat treatment is carried out with the aim of adjusting the hardness of the metallic support layer (4) and the bearing metal layer (6).

12. Method according to one or more of the claims 8-11, **characterised in that** plate sections are separated from the carrier strip, transversely to its longitudinal direction, which are then formed, in a bending/rolling process, into plain bearing elements (20), in particular plain bearing shells (22) or sockets.

13. Method according to one or more of the preceding claims 8-12, **characterised in that** the first powder fraction has a greater tin content than the second powder fraction and that the first powder fraction has a tin content of 8 - 11 wt% and the second powder fraction has a tin content of 3 - 8 wt%, in particular of 3 - 6 wt%.

14. Method according to one or more of the preceding claims 8-13, **characterised in that** a first powder fraction is formed by a CuSn(8-12)Bi(6-10) alloy, in particular by a CuSn(9-11)Bi(7-9) alloy, in particular by a CuSn(10)Bi(8) alloy, and a second powder fraction is formed by a CuSn(4-6) alloy, in particular by a CuSn(5) alloy, wherein the alloys can, optionally, comprise in addition 0.5-5 wt% zinc, in particular 0.5-4 wt% zinc, in particular 0.5-3 wt% zinc, further optionally 0.5-6 wt% nickel, in particular 0.5-5 wt% nickel, in particular 0.5-4 wt% nickel, in particular 0.5-3 wt% nickel, and further optionally 0.1-1 wt% silver, in particular 0.1-0.5 wt% silver.

15. Plain bearing element (20), in particular plain bearing shell (22) serving as a bearing for the crankshaft in internal combustion engines, manufactured from a plain bearing composite material according to one or more of the claims 1-7.

## Revendications

1. Matériau composite pour palier lisse (2) avec une couche métallique de support (4) et une couche antifriction métallique (6), dans lequel la couche antifriction (6) est une couche frittée (10) formée à partir d'une poudre de bronze (8) à base de cuivre-étain, dans lequel la poudre de bronze (8) comprend un lubrifiant solide métallique insoluble ou difficilement soluble dans le cuivre, en particulier du bismuth, et est appliquée sur la couche de support (4) à l'état de poudre et est ensuite frittée sur la couche de support (4), **caractérisé en ce que** la poudre de bronze (8) est formée à partir de fractions de poudre contenant une proportion différente dudit lubrifiant solide, dans lequel la proportion de lubrifiant solide d'une première fraction de poudre est au moins 2 fois supérieure à la proportion de lubrifiant solide d'une seconde fraction de poudre, dans lequel la seconde fraction de poudre peut également être exempte de lubrifiant.

2. Matériau composite pour palier lisse selon la revendication 1, **caractérisé en ce que** la seconde fraction de poudre est réalisée de manière exempte de lubrifiant solide.

3. Matériau composite pour palier lisse selon la revendication 1 ou 2, **caractérisé en ce que** la proportion de lubrifiant solide de la première fraction de poudre est au moins 4 fois, en particulier au moins 6 fois, en particulier au moins 10 fois, supérieure à la proportion de lubrifiant solide de la seconde fraction de poudre.

4. Matériau composite pour palier lisse selon la revendication 1, 2 ou 3, **caractérisé en ce que** le lubrifiant solide est du bismuth.

5. Matériau composite pour palier lisse selon l'une quelconque ou plusieurs des revendications précédentes, **caractérisé en ce que** les fractions de poudre présentent une teneur en étain différente,
et la première fraction de poudre présente une teneur en étain supérieure à celle de la seconde fraction de poudre, en particulier la première fraction de poudre présente une teneur en étain dans la plage comprise entre 8 et 11 % en poids et la seconde fraction de poudre présente une teneur en étain dans la plage comprise entre 3 et 8 % en poids, en particulier dans la plage comprise entre 3 et 6 % en poids.

6. Matériau composite pour palier lisse selon l'une quelconque ou plusieurs des revendications précédentes, **caractérisé en ce qu'**une première fraction de poudre présente une teneur en bismuth dans la plage comprise entre 4 et 20 % en poids, en particulier dans la plage comprise entre 6 et 16 % en poids, en particulier dans la plage comprise entre 8 et 12 % en poids, et une seconde fraction de poudre présente une teneur en bismuth allant jusqu'à 2 % en poids, en particulier allant jusqu'à 1 % en poids et de la manière la plus particulièrement préférée allant jusqu'à 0,1 % en poids.

7. Matériau composite pour palier lisse selon l'une quelconque ou plusieurs des revendications précédentes, **caractérisé en ce qu'**une première fraction de poudre d'un alliage CuSn(8-12)Bi(6-10), en particulier d'un alliage CuSn(9-11)Bi(7-9), en particulier d'un alliage CuSn(10)Bi(8), est formée, et une seconde fraction de poudre d'un alliage CuSn(4-6), en particulier d'un alliage CuSn(5), est formée, dans lequel les alliages peuvent comprendre de manière supplémentaire éventuellement entre 0,5 et 5 % en poids de zinc, en particulier entre 0,5 et 4 % en poids de zinc, en particulier entre 0,5 et 3 % en poids de zinc, ainsi qu'encore éventuellement entre 0,5 et 6 % en poids de nickel, en particulier entre 0,5 et 5 % en poids de nickel, en particulier entre 0,5 et 4 % en poids de nickel, en particulier entre 0,5 et 3 % en poids de nickel, et encore éventuellement entre 0,1 et 1 % en poids d'argent, en particulier entre 0,1 et 0,5 % en poids d'argent.

8. Procédé de fabrication d'un matériau composite pour palier lisse (2) selon l'une quelconque ou plusieurs des revendications précédentes et ultérieurement d'éléments de palier lisse (20), **caractérisé en ce qu'**une poudre de bronze (8) est obtenue en préparant des première et seconde fractions de poudre avec une proportion différente du lubrifiant solide métallique insoluble ou difficilement soluble dans le cuivre, dans lequel la proportion de lubrifiant solide de la première fraction de poudre est au moins 2 fois supérieure à la proportion de lubrifiant solide de la seconde fraction de poudre, et en mélangeant les première et seconde fractions de poudre ensemble, de manière préférée à l'aide d'un mélangeur à nutation, et **en ce que** la poudre de bronze (8) ainsi obtenue est dispersée puis frittée sur une bande porteuse, en particulier en acier, formant la couche métallique de support (4).

9. Procédé selon la revendication 8, **caractérisé en ce que** le frittage comprend un pré-frittage, puis une densification, puis un post-frittage, puis un laminage.

10. Procédé selon la revendication 8 ou 9, **caractérisé en ce que** la couche antifriction est densifiée de sorte qu'il ne reste pratiquement plus de pores exposés entre les particules frittées ensemble de la poudre de bronze.

11. Procédé selon la revendication 8, 9 ou 10, **caractérisé en ce qu'**après le frittage, en particulier lors du post-frittage, en particulier avant et/ou après le laminage, un traitement thermique est mis en oeuvre dans le but d'ajuster la dureté de la couche métallique de support (4) et de la couche antifriction (6).

12. Procédé selon l'une quelconque ou plusieurs des revendications 8 à 11, **caractérisé en ce que** des tronçons de larget sont séparés de la bande porteuse de manière transversale par rapport à la direction longitudinale de celle-ci, et sont ensuite formés selon un procédé de pliage/roulage pour donner des éléments de palier lisse (20), en particulier des coquilles, ou des coussinets, de palier lisse (22).

13. Procédé selon l'une quelconque ou plusieurs des revendications précédentes 8 à 12, **caractérisé en ce que** la première fraction de poudre présente une teneur en étain supérieure à la seconde fraction de poudre, et **en ce que** la première fraction de poudre présente une teneur en étain dans la plage comprise entre 8 et 11 % en poids et la seconde fraction de poudre présente une teneur en étain dans la plage comprise entre 3 et 8 % en poids, en particulier dans la plage comprise entre 3 et 6 % en poids.

14. Procédé selon l'une quelconque ou plusieurs des revendications 8 à 13, **caractérisé en ce qu'**une première fraction de poudre d'un alliage CuSn(8-12)Bi(6-10), en particulier d'un alliage CuSn(9-11)Bi(7-9), en particulier d'un alliage CuSn(10)Bi(8), est formée, et une seconde fraction de poudre d'un alliage CuSn(4-6), en particulier d'un alliage CuSn(5), est formée, dans lequel les alliages peuvent comprendre de manière supplémentaire éventuellement entre 0,5 et 5 % en poids de zinc, en particulier entre 0,5 et 4 % en poids de zinc, en particulier entre 0,5 et 3 % en poids de zinc, ainsi qu'encore éventuellement entre 0,5 et 6 % en poids de nickel, en particulier entre 0,5 et 5 % en poids de nickel, en particulier entre 0,5 et 4 % en poids de nickel, en particulier entre 0,5 et 3 % en poids de nickel, et encore éventuellement entre 0,1 et 1 % en poids d'argent, en particulier entre 0,1 et 0,5 % en poids d'argent.

15. Elément de palier lisse (20), en particulier coquille de palier lisse (22) pour le montage du vilebrequin sur les moteurs à combustion interne, fabriqué à partir d'un matériau composite pour palier lisse selon l'une quelconque ou plusieurs des revendications 1 à 7.
